# EUROPEAN PATENT APPLICATION

(11) **EP 1 736 290 A2**
(43) Date of publication of application: **27.12.2006**
(21) Application number: 06010705.9
(22) Date of filing: 23.05.2006
(51) Int. Cl.: B29C 33/38, C22C 38/40

(54) **Mold and process for the production of rubber product**

(30) Priority: 20.06.2005 JP 2005178922
(71) Applicant: DAIKYO SEIKO, LTD., Tokyo 131-0031 (JP)
(72) Inventor: Sudo, Morihiro, Sumida-ku Tokyo 131-0031 (JP); Kubota, Akihito, Sumida-ku Tokyo 131-0031 (JP)
(74) Representative: Hartz, Nikolai

(57) **Abstract**

A mold for producing a rubber product comprises a precipitation hardening stainless steel without any surface treatment such as plating and/or fluorine resin coating applied to a finished surface of the mold. The rubber product can be produced using the mold upon producing it by compression molding, transfer molding or injection molding.

## Description

### FIELD OF THE INVENTION

This invention relates to a mold for producing rubber products. More specifically, the present invention is concerned with a mold capable of producing high-precision rubber products with excellent productivity because without any application of surface treatment such as plating to a finished surface of the mold, fouling of the mold can be reduced to require its cleaning at extremely low frequency upon producing the rubber products, and also with a process for producing such rubber products.

### DESCRIPTION OF THE BACKGROUND

In general, various rubber products are often produced by compression molding, transfer molding, injection molding or the like, which makes use of molds. Employed as the molds for use in the above-described molding are generally those produced by cutting a steel material such as S55C and then applying surface treatment such as chromium or nickel plating or fluorinated resin coating subsequent to finishing mold surfaces.

Hard chromium plating, which is considered to have highest durability among platings for mold surfaces, is a coating having a hexagonal crystalline structure. Volatiles from a rubber composition, therefore, penetrate through interstices of hexagonal crystals to cause the corrosion of the mold surface and the accumulation of deposits on the surface of the coating, in other words, the so-called mold fouling. As a result, rubber products obtained using the mold are impaired in surface smoothness, causing a reduction in the quality of the rubber products. To remove the mold deposits, the fouled mold has to be washed, and in addition, repeated replating of the mold surface is needed at certain intervals. These work require lots of time and cost, leading to a reduction in the productivity of rubber products.

When electrolytic hard chromium plating is applied to a mold surface, electric charges tend to concentrate on sharply projecting portions of the mold surface during the plating processing. As a consequence, the electrodeposition of chromium takes place in a large amount on the sharply projecting portions, and conversely, the electrodeposition of chromium takes place in a small amount on recessed portions of the mold surface. The roughness of the mold surface is, therefore, increased, resulting in a greater roughness. Even when polishing is applied to the molding surface to lower its roughness subsequent to the plating of the mold surface, the mold surface remains practically unpolished and uneven at certain portions thereof, especially at acute corner portions thereof. It is, therefore, difficult to avoid the above-described mold fouling even when polishing is applied to the metal surface subsequent to the plating of the mold surface as mentioned above. Such polishing still involves a problem in that it does not lead to a reduction in the cleaning frequency of a mold in the course of production of rubber products.

It is also known to form a fluorinated resin film on a polished surface or plated surface of a mold. The formation of such a fluorinated resin film can provide the mold surface with improved corrosion resistance, and can also decrease to some extent the accumulation of deposits on the metal surface. Nonetheless, no substantial reduction can be expected in the cleaning frequency of a mold in the course of production of rubber products. In addition, it is difficult to form a fluorinated resin film at a uniform thickness on the mold surface. Molds provided with such a fluorinated resin film are, therefore, not suited for the production of rubber products for the above-mentioned applications which require high dimensional accuracy. Moreover, the resin film is inferior in physical durability and therefore, involves another problem in that the dimensional accuracy of each mold is lowered due to wearing of the resin film not only during the molding of rubber products but also in cleaning steps of the mold.

As a mold which has resolved the above-described problems, a mold for the production of vulcanized rubber products is disclosed in JP-A-11-198148. This mold is made of high alloy steel, and no surface treatment such as plating and/or fluorinated resin coating has been applied to its finished surface. As an example of the high alloy steel, an improved product of SUS420F is disclosed. As a more specific example, a high alloy steel formed of carbon steel and chromium element added thereto is mentioned. As a commercial product, "RAMAX X" (trade name, product of Uddeholm KK) is mentioned. This mold for the production of vulcanized rubber products makes it possible to substantially reduce the occurrence of mold deposits, and as a result, to significantly reduce the cleaning frequency of the mold. Reflecting the severe price competition and the move toward still higher quality in recent years, there is an outstandingly strong desire for the development of a mold for the production of rubber products, which can further reduce the washing frequency.

### SUMMARY OF THE INVENTION

An eventual object of the present invention is, therefore, to significantly improve the productivity of such rubber products by reducing the occurrence of mold deposits upon production of the rubber products and substantially reducing the frequency of maintenance work such as mold cleaning. To achieve the eventual object, however, the present invention has as its direct objects the provision of a mold for producing rubber products, said mold enabling to provide the rubber products with excellent surface smoothness, and also the provision of a process for producing such rubber products by using the mold.

The present inventors proceeded with various investigations on materials of molds for molding rubber products. As a result, it was found that, when a mold is formed with precipitation hardening stainless steel, the occurrence of such mold fouling as described above can be significantly reduced without application of any surface treatment such as plating or fluorinated resin coating to the surface of the mold subsequent to its finishing and hence that the need for its maintenance can be lessened as typified by a reduction in the cleaning frequency of the mold. Those findings have now led to the completion of the present invention. It is to be noted that precipitation hardening stainless steel itself is known and, for example, its forging process is disclosed in JP-A-06-010042.

In one aspect of the present invention, there is thus provided a mold for producing a rubber product, comprising a precipitation hardening stainless steel without any surface treatment such as plating or fluorine resin coating or the combination thereof applied to a finished surface of the mold.

Preferably, the precipitation hardening stainless steel may comprise a stainless steel of a structure, which is selected from martensite structure, austenite structure or austenite-ferrite structure, and copper element or aluminum element added to the stainless steel of the structure; the precipitation hardening stainless steel may comprise a stainless steel of martensite structure and copper element added thereto; and the rubber product may be a rubber product for a medicament or medical care, a food or a cosmetic.

Also preferably, the rubber product may be a rubber closure for a container for a medicament or medical care, which rubber closure is at one member selected from the group consisting of a rubber closure for a vial preparation, a rubber closure for an infusion, a piston for a syringe, a rubber closure for a container syringe, and a puncture portion of a stopper for an infusion. Further the rubber product may be a rubber product whose at least surface area may be covered with a coating of an α-olefin polymer such as polyethylene or a fluorinated polymer.

In another aspect of the present invention, there is also provided a process for producing a rubber product, which comprises using a mold, which comprises a precipitation hardening stainless steel without any surface treatment such as plating and/or fluorine resin coating applied to a finished surface of the mold, upon producing the rubber product by compression molding, transfer molding or injection molding.

According to the present invention, the cleaning frequency of a mold can be substantially reduced upon producing rubber products, thereby making it possible to significantly improve the productivity of the rubber products. As a result of the inhibition of fouling of the mold surface, it is also possible to produce excellent rubber products without admixed foreign substances which would otherwise be contained due to fouling, corrosion and the like of the mold surface.

### DETAILED DESCRIPTION OF THE INVENTION AND PREFERRED EMBODIMENTS

The present invention will next be described in further detail based on the best modes for carrying out the present invention. No particular limitation is imposed on rubber products to be produced with the mold according to the present invention, insofar as they are produced using a mold, for example, by compression molding, transfer molding or injection molding. Among such rubber products, rubber closures for containers for medicaments or medical care, foods or cosmetics and rubber products for medical devices can be mentioned as preferred examples. More specific examples include rubber closures of diverse sizes and shapes for vial preparations or infusions, pistons (sliding plugs) for syringes, sealing rubber closures or plugs for container syringes (needle hubs, insert plugs for hollow barrels, and rubber closures as lower end seals for hollow barrels), and puncture portions of stoppers for infusions.

These products are required to have very high quality for their application purposes, and the admixture of any foreign substances in such rubber products due to the fouling, corrosion and/or the like of the mold surface becomes a fatal defect. These products conventionally include those making use of a feed material or additive which contains an element, such as a halogen or sulfur, that gives off a highly-corrosive gas. For such products, plating and/or fluorinated resin coating for the mold surface is indispensable.

Each mold useful for the production of rubber products in the present invention is obtained by using precipitation hardening stainless steel as a feed material, forming it into a predetermined shape by cutting or the like in a manner known *per se* in the field of mold production, and then applying hardening heat treatment (aging heat treatment).
By the aging heat treatment, a copper-rich phase (in the case of a copper-added system) or a nickel-chromium intermetallic compound (in the case of an aluminum-added system) is formed on the surface of the mold to provide the mold surface with improved hardness and corrosion resistance.

Similar to other stainless steels, the surface layer of the above-described material is equipped with auto-restoring property which is exhibited upon exposure to air. Even when the mold surface of the above-described material is scratched or otherwise damaged, the mold surface is not corroded from such scratches or damages. Although no surface treatment such as plating and/or fluorinated resin coating is applied at all to the mold of the present invention, mold fouling is inhibited or reduced in the production of rubber products, and as a result, the frequency of mold cleaning is substantially reduced in the production of rubber products, thereby exhibiting a marked advantageous effect that the productivity of rubber products can be significantly increased. As a ripple effect available from the use of the above-described material as a material of a mold, it is also possible to save the time and cost which have heretofore been required for the surface treatment such as plating and/or fluorinated resin coating to the mold surface. In addition, the work required for the maintenance of the mold such as repeated replating of the mold surface at predetermined intervals can be reduced, leading to a reduction in maintenance cost. Moreover, the occurrence of corrosion on the mold surface can be basically inhibited so that even the service life of the mold can be prolonged.

The precipitation hardening stainless steel employed in the production of the mold according to the present invention is formed of stainless steel of any one of martensite structure, austenite structure and austenite-ferrite structure and copper element and aluminum element added thereto. Known examples of such precipitation hardening stainless steel include SUS630 (Cu-added martensite structure) and SUS631 (Al-added martensite structure). "NAK101" (trade name, product of Daido Steel Co., Ltd.), an improved product of SUS630, is commercially available.

As a rubber material for use in the production of rubber products with the mold of the present invention, any rubber material can be chosen insofar as it satisfies properties required for the rubber products, and therefore, no limitation is imposed on the kind of rubber material. In the production of rubber closures or plugs for medicaments or medical devices, for example, usable examples include butyl rubber, chlorinated butyl rubber, brominated butyl rubber, divinylbenzene-copolymerized and partially-crosslinked butyl rubber, high-cis polybutadiene rubber, high-cis polyisoprene rubber, epichlorohydrin-based rubbers, styrene-butadiene copolymer rubber (SBR), acrylonitrile-butadiene copolymer rubber (NBR), ethylene-propylene-diene monomer terpolymer rubbers (EPDM), acrylic rubber, and thermoplastic elastomers.

For the production of rubber products, employed is a rubber composition which has been prepared by adding a sulfur-based crosslinking agent, crosslinking aid, crosslinking promoter and/or the like (sulfur-based crosslinking system) or an organic peroxide crosslinking agent, crosslinking aid and/or the like (organic-peroxide-based crosslinking system) to a rubber material, optionally adding a reinforcement such as silica, a filler such as calcium carbonate, a colorant such as carbon black, a processing aid and one or more additives such as an age resister as needed, and mixing them in a conventional mixer such as a Banbury mixer, rolls or an internal mixer. As the additives, those conventionally employed in various rubber products are usable. The kinds and amounts of such additives can be determined to meet the performance required for the rubber products, and therefore, no limitations are imposed on them. In the case of rubber products for medicaments or medical devices, it is important to determine the kinds and amounts of additives such that various official standards can be met in safety and sanitation requirements.

Using the above-described rubber composition, rubber products are produced by a molding machine equipped with a mold according to the present invention, the plug and cavity of which are formed to provide the rubber products with intended external dimensions and shape. Depending on the kind of the rubber products, a compression molding machine (pressure molding machine), transfer molding machine, injection molding machine or the like is used. When a compression molding machine is used, molding of a sheet-like rubber composition together with a fluorinated resin film or a film of an α-olefin polymer such as polyethylene or polypropylene placed over or under the sheet-like rubber composition makes it possible to produce a rubber product, whose surface is covered at least at a part thereof with the film.

The present invention will hereinafter be described more specifically based on Examples and Comparative Examples.

The sizes of molds were all set at about 900 x 600 mm, and the maximum diameters of rubber closures and pistons to be produced were all set at about 15 mm.

### Example 1

A precipitation hardening stainless steel, SUS630 (martensitic stainless steel with copper element added therein), was provided as a mold material. Combining NC milling and electrical discharge machining, a mold for rubber closures for vial preparation containers was produced with about 650 cavities defined thereon in the form of the rubber closures. Surface treatment such as plating or fluorinated resin coating was not applied at all to the finished surface of the mold.

### <Molding test>

Using the mold of Example 1, rubber closures were molded by compression molding under conditions of 160°C and 15 minutes from a crosslinking butyl rubber composition. The test was designed to perform the molding repeatedly as many as 1,000 times and to conduct cleaning as soon as a molding failure due to mold fouling would begin to take place. The number of cleaning and the degree of fouling are presented in Table 1.

### Example 2

A molding test was performed with a mold produced in a similar manner as in Example 1 except that the mold material was changed to a precipitation hardening stainless steel, SUS631 (martensitic stainless steel with aluminum element added therein). The number of cleaning and the degree of fouling are presented in Table 1.

### Comparative Example 1

A molding test was performed with a mold produced in a similar manner as in Example 1 except that for the sake of comparison, austenitic stainless steel, SUS304, was used as a mold material and chromium plating was applied to the finished surface of the mold. The number of cleaning and the degree of fouling are presented in Table 1.

### Examples 3,4 & Comparative Example 2

Using the same mold materials as those employed in Examples 1 and 2, respectively, molds for pistons for container syringes were produced by NC milling with about 650 cavities/mold defined thereon in the form of the pistons in Examples 3 and 4. Surface treatment such as plating or fluorinated resin coating was not applied at all to the finished surfaces of the molds. With those molds, molding tests were performed, respectively. For the sake of comparison, a further molding test was performed in a similar manner as in Example 3 except that the austenitic stainless steel, SUS304, was used as a mold material and chromium plating was applied to the finished mold surface. The numbers of cleaning and the degrees of fouling in the examples and comparative example are presented in Table 1.

**Table 1**

| Molds for Compression Molding (without fluorinated resin film) | | | | | | |
|---|---|---|---|---|---|---|
| | Example 1 | Example 2 | Example 3 | Example 4 | Comp. Ex. 1 | Comp. Ex. 2 |
| Mold material | SUS630 | SUS631 | SUS630 | SUS631 | SUS304 | SUS304 |
| Surface treatment | Not applied | Not applied | Not applied | Not applied | Chromium plating | Chromium plating |
| Molded products | Rubber closures for vials | Rubber closures for vials | Pistons for syringes | Pistons for syringes | Rubber closures for vials | Pistons for syringes |
| Fluorinated resin coating | Not applied | Not applied | Not applied | Not applied | Not applied | Not applied |
| Number of cleaning | 0 | 0 | 0 | 0 | 12 | 12 |
| Degree of fouling after molding 1,000 times | Fouling was not observed practically | Fouling was observed slightly | Fouling was not observed practically | Fouling was observed slightly | Cleaning was needed after every 80^{th} molding or so | Cleaning was needed after every 80^{th} molding or so |

### Examples 5-8 & Comparative Examples 3,4

Molding tests were performed by producing fluorinated-resin-coated rubber closures for medicament containers (vials) or fluorinated-resin-coated rubber pistons for medical devices (prefilled syringes) with similar molds as in Examples 1-4 and Comparative Examples 1 and 2, respectively, except that as crosslinking butyl rubber compositions to be filled in the respective molds, those carrying a fluorinated resin film stacked on their upper surfaces were used. The numbers of cleaning and the degrees of fouling in the examples and comparative examples are presented in Table 2.

**Table 2**

| Molds for Compression Molding (with fluorinated resin film) | | | | | | |
|---|---|---|---|---|---|---|
| | Example 5 | Example 6 | Example 7 | Example 8 | Comp. Ex. 3 | Comp. Ex. 4 |
| Mold material | SUS630 | SUS631 | SUS630 | SUS631 | SUS304 | SUS304 |
| Surface treatment | Not applied | Not applied | Not applied | Not applied | Chromium plating | Chromium plating |
| Molded products | Rubber closures for vials | Rubber closures for vials | Pistons for syringes | Pistons for syringes | Rubber closures for vials | Pistons for syringes |
| Fluorinated resin coating | Applied | Applied | Applied | Applied | Applied | Applied |
| Number of cleaning | 0 | 0 | 0 | 0 | 12 | 11 |
| Degree of fouling after molding 1,000 times | Fouling was not observed practically | Fouling was observed slightly | Fouling was not observed practically | Fouling was observed slightly | Cleaning was needed after every 80^{th} molding or so | Cleaning was needed after every 90^{th} molding or so |

### Examples 9-12 & Comparative Examples 5,6

Molding tests were performed as in Examples 1-4 and Comparative Examples 1 and 2, respectively, except that the molds for compression molding were replaced by molds for injection molding and injection molding operations were conducted. The numbers of cleaning and the degrees of fouling in the examples and comparative examples are presented in Table 3.

**Table 3**

| Molds for Injection Molding (without fluorinated resin film) | | | | | | |
|---|---|---|---|---|---|---|
| | Example 9 | Example 10 | Example 11 | Example 12 | Comp. Ex. 5 | Comp. Ex. 6 |
| Mold material | SUS630 | SUS631 | SUS630 | SUS631 | SUS304 | SUS304 |
| Surface treatment | Not applied | Not applied | Not applied | Not applied | Chromium plating | Chromium plating |
| Molded products | Rubber closures for vials | Rubber closures for vials | Pistons for syringes | Pistons for syringes | Rubber closures for vials | Pistons for syringes |
| Fluorinated resin coating | Not applied | Not applied | Not applied | Not applied | Not applied | Not applied |
| Number of cleaning | 0 | 0 | 0 | 0 | 12 | 12 |
| Degree of fouling after molding 1,000 times | Fouling was not observed practically | Fouling was observed slightly | Fouling was not observed practically | Fouling was observed slightly | Cleaning was needed after every 80^{th} molding or so | Cleaning was needed after every 80^{th} molding or so |

### Examples 13-16 & Comparative Examples 7,8

Molding tests were performed as in Examples 1-4 and Comparative Examples 1 and 2, respectively, except that the molds for compression molding were replaced by molds for transfer molding and transfer molding operations were conducted. The numbers of cleaning and the degrees of fouling in the examples and comparative examples are presented in Table 4.

**Table 4**

| Molds for Transfer Molding (without fluorinated resin film) | | | | | | |
|---|---|---|---|---|---|---|
| | Example 13 | Example 14 | Example 15 | Example 16 | Comp. Ex. 7 | Comp. Ex. 8 |
| Mold material | SUS630 | SUS631 | SUS630 | SUS631 | SUS304 | SUS304 |
| Surface treatment | Not applied | Not applied | Not applied | Not applied | Chromium plating | Chromium plating |
| Molded products | Rubber closures for vials | Rubber closures for vials | Pistons for syringes | Pistons for syringes | Rubber closures for vials | Pistons for syringes |
| Fluorinated resin coating | Not applied | Not applied | Not applied | Not applied | Not applied | Not applied |
| Number of cleaning | 0 | 0 | 0 | 0 | 12 | 12 |
| Degree of fouling after molding 1,000 times | Fouling was not observed practically | Fouling was observed slightly | Fouling was not observed practically | Fouling was observed slightly | Cleaning was needed after every 80^{th} molding or so | Cleaning was needed after every 80^{th} molding or so |

When the molds according to the present invention were used, none of the molds developed any substantial mold fouling and required any cleaning even after the molding had been repeated as many as 1,000 times. When the conventional molds (SUS304-based stainless steel + chromium plating) were used, on the other hand, both of them began to develop mold fouling when the molding had been repeated only 20 times or so, and required cleaning when the molding had been repeated approximately 80 times. After cleaning, the molding was resumed. In the course of performing the molding 1,000 times, cleaning was, therefore, conducted 11 to 12 times in total. As each cleaning required about 10 minutes, an extra time as much as two hours in total was wasted for mold cleaning.

Chemical compositions, other than iron, of the materials used for the production of the molds in the examples and comparative examples are presented in Table 5.

**Table 5**

| (wt.%) | | | |
|---|---|---|---|
| Material | SUS630 | SUS631 | SUS304 |
| C | 0.05 | 0.04 | 0.06 |
| Si | 0.31 | 0.42 | 0.54 |
| Mn | 0.64 | 0.66 | 1.62 |
| P | 0.03 | 0.02 | 0.02 |
| S | 0.002 | 0.003 | 0.008 |
| Cu | 3.26 | - | - |
| Ni | 4.20 | 6.80 | 9.00 |
| Cr | 15.6 | 17.2 | 19.0 |
| Mo | 0.24 | - | - |
| Nb | 0.31 | - | - |
| Al | - | 0.90 | - |

This application claims the priority of Japanese Patent Application 2005-178922 filed June 20, 2005, which is incorporated herein by reference.

## Claims

1. A mold for producing a rubber product, comprising a precipitation hardening stainless steel without any surface treatment such as plating and/or fluorine resin coating applied to a finished surface of said mold.

2. A mold according to claim 1, wherein said precipitation hardening stainless steel comprises a stainless steel of a structure, which is at one member selected from the group consisting of martensite structure, austenite structure or austenite-ferrite structure, and at least one element selected the group consisting copper element and aluminum element added to a stainless steel of at least one structure selected from the group consisting of martensite structure, austenite structure or austenite-ferrite structure.

3. A mold according to claim 2, wherein said precipitation hardening stainless steel comprises a stainless steel of martensite structure and copper element added thereto.

4. A mold according to claim 1, wherein said mold is a mold for producing a rubber product for at one least one member selected from the group consisting of medicaments, medical care, foods and a cosmetics.

5. A mold according to claim 4, wherein said rubber product is a rubber closure for a container for medicaments and medical care, which rubber closure is at one member selected from the group consisting of a rubber closure for a vial preparation, a rubber closure for an infusion, a piston for a syringe, a rubber closure for a container syringe, and a puncture portion of a stopper for an infusion.

6. A mold according to claim 4 or 5, wherein said rubber product is a rubber product a surface area of which is at least covered with a coating of an α-olefin polymer such as polyethylene or a fluorinated polymer.

7. A process for producing a rubber product, which comprises using a mold, which comprises a precipitation hardening stainless steel without any surface treatment such as plating and/or fluorine resin coating applied to a finished surface of said mold, upon producing said rubber product by compression molding, transfer molding or injection molding.
